# EUROPEAN PATENT APPLICATION

(11) **EP 1 108 884 A2**
(43) Date of publication of application: **20.06.2001**
(21) Application number: 00125631.2
(22) Date of filing: 23.11.2000
(51) Int. Cl.: F02M 37/22

(54) **Threaded filter housing to retain water separator bowl**

(30) Priority: 14.12.1999 US 460752
(71) Applicant: CATERPILLAR INC., Peoria Illinois 61629-6490 (US)
(72) Inventor: Amstutz, Aaron K., c/o Caterpillar Inc., Peoria, Illinois 61629-6490 (US); Becktel, David C., c/o Caterpillar Inc., Peoria, Illinois 61629-6490 (US)
(74) Representative: Wagner, Karl H., Dipl.-Ing.

(57) **Abstract**

The invention relates generally to a fuel filter assembly (2) with a filter housing (4) which attaches directly to a water separator bowl (12), thereby eliminating the need for a threaded adapter ring.

## Description

### Technical Field

The present invention relates generally to a fuel filter assembly with a filter housing, having a rolled thread for attaching a water separator bowl directly to the filter housing.

### Background Art

This invention relates generally to a fuel filter assembly, preferably for use on a vehicle. While fuel tanks for earthmoving vehicles are of substantial capacity, it is general practice to add fuel to the tanks from large drums or cans stored at the work site. Unfortunately, these drums are usually stored outdoors so that rain water collects on the drums and can inadvertently mix with the fuel. Condensation also adds moisture as the tank is warmed and cooled with temperature fluctuations. As a consequence of these outdoor conditions, such as the necessity of filling the fuel tanks in rainy weather, water can get into the fuel in the tank. During subsequent operation of the vehicle the water and fuel are agitated so that a fuel and water mixture is fed to the engine's fuel system. This causes engine operating problems, and excessive wear of moving parts particularly in the fuel system. In addition, the water in the tank and associated passages produces rust, which in turn is fed into the fuel supply system and results in clogging and/or greater rates of engine wear.

Many attempts have been proposed for removing water from the fuel tank, such as a water separator installed in a suitable position in the fuel supply system. The prior art utilized a water separator bowl, a filter housing, and a threaded adapter collar for attaching the water separator bowl to the filter housing.

One example is U.S. Pat. No. 5,904,844, issued 18 May 1999, and assigned to Parker Intangibles Inc., which utilized a threaded adapter ring to attach the water separator bowl and the filter housing. The threaded adapter ring was applied by adhering the ring to the filter housing. The additional adapter piece adds additional cost and reduces manufacturing efficiency.

Moreover, prior water separators generally caused leakage past the threads on the drain valve as the operator drained the collected water from the bowl. This allows water and fuel to leak out during draining getting the operators hands dirty and spilling fuel to the ground.

### Disclosure of the Invention

In one aspect of the invention, a fuel filter assembly is provided having an annular filter housing with a rolled thread to attach directly to a threaded water separator bowl. A seal member is interposed the annular filter housing and the threaded water separator bowl.

### Brief Description of the Drawings

Fig. 1 is a top view of the fuel filter assembly; and
Fig. 2 is a side view of the fuel filter assembly.

### Best Mode for Carrying Out the Invention

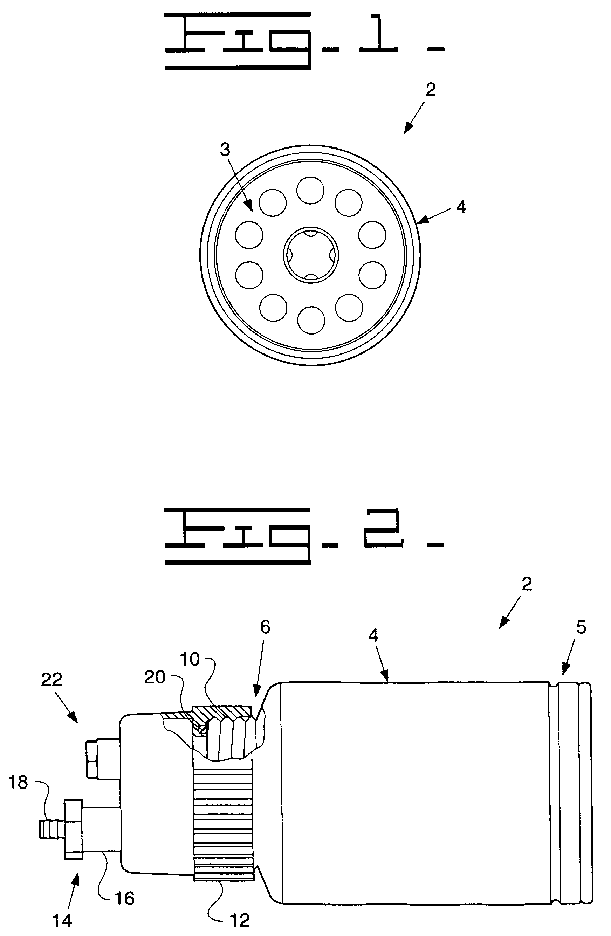

Turning to the drawings, a fuel filter assembly 2 of the present invention is depicted. A top plate 3 is shown in Fig. 1 assembled within an annular fuel filter housing 4.

The annular fuel filter housing 4, more particularly a canister, has a first end portion 5 and a second end portion 6. The second end portion 6 has a rolled thread 10, preferably formed integrally thereon. The annual fuel filter housing 4 is preferably made from a metal, more preferably steel.

A threaded water separator bowl 12 is supported by the second end portion 6 of the annular fuel filter housing 4 and is releasably engaged therewith. The threaded water separator bowl 12 is preferably made from, but not limited to, a polymer, more preferably a rigid polymer with temperature and chemical resistance, such as amorphous nylon, poly(phenylsulfone), thermoplastic polyurethane and the like. In an alternate embodiment, the threaded water separator bowl 12 is made of metal.

The threaded water separator bowl 12 may be of unitary construction or may be constructed from two individually molded parts which are then unified. The threaded water separator bowl 12 is preferably formed integrally from two individually molded parts by ultrasonic welding. It is contemplated that several molding processes may be utilized to form the two individually molded parts, including, but not limited to, injection molding, blow molding, compression molding, and thermoforming.

It is also contemplated that several processes may be utilized to attach the two individually molded parts to integrally form the threaded water separator bowl 12. The processes include, but are not limiting to, ultrasonic welding, rotational welding, and solvent welding.

In one embodiment of the present invention, a drain valve assembly 14 for draining the water collected in the threaded water separator bowl 12 includes a drain valve 18 and a drain port 16. The drain valve 18 is preferably constructed of a thermoplastic elastomer. The elastomeric material allows a slight interference fit, which prevents the passage of fuel past the thread. It also allows the valve to be rotated during opening with little effort unlike a hard valve with interference fit. There are also two radial seals on the drain valve 18 which are molded directly into the drain valve 18.

A seal member 20 is interposed between the fuel filter housing 4 and the threaded water separator bowl 12 for sealing the assembly.

As shown in Fig. 2, in one embodiment, there is also a water sensor port 22 in the fuel filter assembly 2 for a water sensor.

### Industrial Applicability

During use of the fuel filter assembly 2 as set forth in Figs. 1 and 2, the integral rolled thread of the second end portion 6 of the annular filter housing 4 attaches directly to the threaded water separator bowl 12.

As illustrated in Fig. 2, during the making of the annual filter housing 4, the rolled thread 10 is produced integrally with the second end portion 6 of the annular filter housing 4.

As shown in Fig. 2, the drain valve assembly 14, including the drain valve 18 and the drain port 16, may be included in the fuel filter assembly 2. The drain valve 18 in Fig. 2 is preferably made of an elastomeric material to give a slight interference fit. This prevents the passage of fuel past the thread during draining.
In view of the above, it is readily apparent that a integral rolled thread 10 of the second end portion 6 of the annular filter housing 4 is provided that eliminates the need for a threaded adapter collar for attaching the threaded water separator bowl 12. This eliminates the adapter piece which adds additional cost and manufacturing efficiency.

Other aspects, objects and advantages of this invention can be obtained from a study of the drawings, the disclosure and the appended claims.

## Claims

1. A fuel filter assembly (2) comprising:
a top plate (3);
an annular filter housing (4) having a first end portion (5) and a second end portion (6), said second end portion (6) having a rolled thread (10) being formed integrally therewith;
a threaded water separator bowl (12) supported by said second end portion (6) and releasably engaged therewith; and
a seal member (20) interposed said annular filter housing (4) and said threaded water separator bowl (12).

2. The fuel filter assembly (2) as in claim 1, wherein said filter housing (4) is metal.

3. The fuel filter assembly (2) as in claim 2, wherein said filter housing (4) is steel.

4. The fuel filter assembly (2) as in claim 2, wherein said filter housing (4) is a canister.

5. The fuel filter assembly (2) as in claim 1, wherein said rolled thread (10) is an external thread.

6. The fuel filter assembly (2) as in claim 1, wherein said threaded water separator bowl (12) includes a drain valve assembly (14) for draining said threaded water separator bowl (12).

7. The fuel filter assembly (2) as in claim 6, wherein said drain valve assembly (14) includes a drain valve (18) and a drain (16).

8. The fuel filter assembly (2) as in claim 1, wherein said threaded water separator bowl (12) is a polymer.

9. The fuel filter assembly (2) as in claim 8, wherein said threaded water separator bowl (12) is nylon.

10. The fuel filter assembly (2) as in claim 8, wherein said threaded water separator bowl (12) is poly (phenylsulfone).

11. The fuel filter assembly (2) as in claim 8, wherein said threaded water separator bowl (12) is thermoplastic polyurethane.

12. The fuel filter assembly (2) as in claim 1, wherein said threaded water separator bowl (12) is metal.

13. The fuel filter assembly (2) as in claim 1, wherein said drain valve (18) is an elastomer.

14. The fuel filter assembly (2) as in claim 1, wherein said drain valve (18) is a thermoplastic elastomer.

15. The fuel filter assembly (2) as in claim 1, wherein said threaded water separator bowl (12) includes a water sensor port (22).
